# EUROPEAN PATENT SPECIFICATION

(11) **EP 2 408 855 B1**
(45) Date of publication and mention of the grant of the patent: **20.08.2014**
(21) Application number: 10753861.3
(22) Date of filing: 03.03.2010
(51) Int. Cl.: C08K 5/103, C09D 131/04, C09J 131/04, C09D 5/02

(54) **AQUEOUS POLYMER COMPOSITIONS CONTAINING GLYCEROL ESTERS AS PLASTICIZERS**
WÄSSRIGE POLYMERZUSAMMENSETZUNGEN MIT GLYCEROLESTERN UND WEICHMACHERN
COMPOSITION POLYMÈRE AQUEUSE CONTENANT DES ESTERS DE GLYCÉROL EN TANT QUE PLASTIFIANTS

(30) Priority: 18.03.2009 US 406511
(43) Date of publication of application: 25.01.2012
(73) Proprietor: Eastman Specialties Holdings Corporation, Kingsport, Tennessee 37660 (US)
(72) Inventor: JOSHI, Makarand V., Grayslake Illinois 60030 (US); ARENDT, William D., Libertyville Illinois 60048 (US); BERRY-WALKER, Yvonne Aileen, Elkhorn Wisconsin 53121 (US); BUTT, Jason, Berwyn Illinois 60402 (US)
(74) Representative: Ricker, Mathias
(86) International application number: PCT/US2010/026048
(87) International publication number: WO 2010/107583

(56) References cited:
- WO-A1-95/03372
- WO-A1-2007/062771
- WO-A1-2008/054277
- US-A- 3 447 954
- US-A- 3 668 158
- US-B1- 6 656 984
- US-B1- 6 656 984
- US-B2- 7 495 055

## Description

The present invention relates to aqueous polymer compositions containing a group of glycerol esters that have not previously been described as effective plasticizers for these types of polymer compositions in the absence of other additives. Preferred members of this group of esters exhibited unexpectedly large viscosity increases in aqueous polymer dispersions in addition to effectively reducing the glass transition temperature of the dispersed polymer.

### BACKGROUND

Aqueous polymer compositions suitable for use as adhesives, sealants, waxes, polishes, coatings, including paints, overprint varnishes and inks contain as the film-forming ingredient a finely divided film-forming polymer in the form of a suspension. These compositions also typically may include one or more compounds that function as surfactants, plasticizers and coalescing agents to assist in formation of a continuous film when the dispersion is applied to a substrate.

One of the functions of a coalescing agent is to lower the minimum temperature at which the suspended polymer particles will form a continuous film on a substrate, referred to as MFFT. Coalescing agents are typically volatile, and evaporate shortly following application of the film. While plasticizers may also assist in formation of a coherent film, they are non-volatile and therefore remain in the applied film, imparting desirable properties such as softening of the polymer.

Known plasticizers for aqueous film-forming compositions, as distinguished from coalescing agents, include the esters and ethers listed in U.S. Patent No. 5,442,001, which issued to Jones et al. on August 15, 1995. The '001 patent does not describe esters of glycerol.

PCT Application WO 2008/054277 A1 describes the use of triesters of glycerol with carboxylic acids containing from 1 to 5 carbon atoms as coalescing agents for "aqueous binder compositions". The binder compositions are described as useful in waterborne paints, adhesives and sealants. As indicated on page 2 of this application, "the low plasticizing property of the present invention enables the formation of a hard film to an acceptable hardness development rate". Hence, glycerol esters are not considered to be functioning as plasticizers in the applied film.

U.S. Patent No. 3,668,158 describes aqueous polymer emulsions for use in adhering a plastic film to a non-metallic substrate. In addition to a film-forming polymer, a copolymer of a 1-olefin and a vinyl ester of a lower carboxylic acid, the emulsions contain 1) as a coalescent, a water-soluble ester of a mono C1 to C4 alkyl ether of a C2 to C8 glycol with a C2 to C4 saturated monocarboxylic acid; and 2) a "plasticizing ester" of glycerin and a C2 -C4 saturated monocarboxylic acid. Both the coalescent and the plasticizing ester are required to achieve the desired adhesion. The '158 patent indicates that lower esters of glycerol (i.e. the triacetate) gave better performance relative to tributyrate.

Wo 2007/062771 relates to polyvinyl ester dispersions having a minimum film formation temperature of less than or equal to 10 °C. These comprise a crosslinkable polyvinyl ester dispersion and an ester of aliphatic monocarboxylic acids and at least trihydric aliphatic alcohols and/or an ester of at least tribasic aliphatic carboxylic acids and monohydric aliphatic alcohols as film formation assistants. These polyvinyl ester dispersions can be used as adhesives with high water resistance.

WO 95/03372 relates to the use of glycerine triesters with lower aliphatic monocarboxylic acids, citric acid triesters with lower aliphatic monofunctional alcohols and/or epoxidised triglycerides of at least olefinically unsaturated fatty acids as bio-degradable softeners in aqueous polyvinyl acetate dispersions for use in solidifying the surface of sand and/or earth.

US6656984 relates to a hydrophobic polymer dispersion and a solvent-free process for the preparation thereof. The dispersion contains starch ester together with dispersion admixtures known as such. The dispersion obtained by the invention can be used to coat paper or board, as a primer or a component in paint or labeling adhesives, and it is also suitable for the production of cast films and as a binder in materials based on cellulose fibers, as well as for coating medicinal preparations.

The present invention is based on the discovery that for many aqueous polymer dispersions useful as coatings, adhesives, polishes and sealants and other end-use applications, both the desired film-forming properties of the dispersion and properties exhibited by the final film are improved using a specified class of glycerol esters without the alkyl ether coalescents described in the aforementioned '158 patent

### SUMMARY

Film-forming properties of aqueous polymer dispersions and the properties exhibited by films from these dispersions are improved using plasticizers that inlcude mono-, di- and triesters of glycerol. The dispersions are useful as aqueous coatings, sealants, adhesives, polishes, films and inks. The plasticizers of this invention can be used with any of the organic polymers conventionally used in aqueous film-forming compositions, including polyvinyl acetate, copolymers of vinyl acetate with ethylene or other olefins, acrylic polymers, acrylic/styrene copolymers, polyesters, polyurethanes, elastomeric styrene/butadiene copolymers and neoprene and are compatible with other plasticizers and coalescents.

An aqueous film-forming polymer composition is provided that includes an aqueous emulsion that includes 1) an aqueous phase, 2) a suspended phase comprising particles of a film-forming organic polymer, and 3) an amount of glycerol ester effective for plasticizing said polymer. The glycerol ester is a mixture of mono-, di- and triesters of glycerol. The blend comprises 15 to 25 parts monoester, 45 to 55 parts diester and 25 to 35 parts triester per 100 parts of glycerol ester blend. Glycerol esters which can be utilized have a general formula 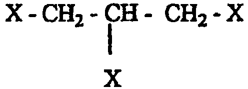 wherein 0 to 2 X groups are hydroxyl and 1 to 3 X groups are 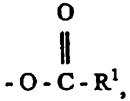 wherein R¹ is -(CH₂)ₙ-CH₃, where n is 1 to 5,
wherein all R¹ groups are identical.

A method is provided for making an aqueous film-forming polymer composition. The method includes dispersing particles of film-forming organic polymer in an aqueous phase to form an aqueous dispersion of film-forming polymer. A glycerol ester of the general formula is blended with the aqueous dispersion of film-forming polymer in an amount effective for plasticizing the polymer.

### DETAILED DESCRIPTION

The present plasticizers are compatible with a wide variety of film-forming polymers typically used in aqueous compositions. These polymers include but are not limited to acrylic polymers, acrylic/styrene copolymers, polyvinyl acetate and copolymers, including but not limited to ethylene/vinyl acetate copolymers, acrylics, polyurethanes, styrene/butadiene copolymers and neoprene.

Useful glycerol esters include mono-, di, and triesters of glycerol and carboxylic acids containing up to 6 carbon atoms, including but not limited to glycerol mono-, di- and tripropionate, glycerol mono-, di- and tributyrate, up to and including glycerol mono-, di- and trihexanoates. In an important asepect, the ester is compatible with the desired aqueous polymer dispersion. Compatibility of a given ester with the aqueous polymer dispersion can be easily determined by blending the desired amount of glycerol ester with the polymer dispersion at the desired temperature.

The present invention is based, in part, on the discovery that to maximize plasticization of the dispersed polymer particles and to reduce the polymer's glass transition temperature, the average molecular weight of the ester phase of the polymer dispersion should typically be maximized, preferably to a point just short of separation of the ester from the dispersion at the desired plasticizer concentration level. In this aspect, the average molecular weight of the ester phase of the polymer dispersion is about 239 to about 386. The present glycerol ester and blends thereof constitute from 0.1 to 50 weight percent, preferably from 0.1 to 20 weight percent of the aqueous film-forming polymer composition.

The glycerol esters are a blend of the tri-, di- and monoesters, of glycerol. The blend comprises 15 to 25 parts of the monoester, 45 to 55 parts of the diester, and 25 to 35 parts of the triester, In an important aspect, the blend includes about 20 parts of the monoester, about 50 parts of the diester, and about 30 parts of the triester. These amounts are parts by weight based on 100 parts of glycerol ester blend.

The glycerol esters may be used as the only plasticizer in aqueous polymer compositions. Alternatively, these esters may be used in combination with one or more of the plasticizers conventionally used in aqueous polymer dispersions. These additional plasticizers include but are not limited to esters derived from a) the reaction of monofunctional alcohols with monofunctional acids; b) the reaction of glycols or diols with monofunctional acids such as benzoic acid, or c) the reaction of an alkyl or aromatic dicarboxylic acid such as phthalic acid with a monofunctional or polyfunctional alcohol. Esters of benzoic acid together with mono- and diesters of the isomeric cyclohexanedicarboxylic acids, also referred to as hexahydrophthalic acids, are preferred classes of auxiliary plasticizers. Other plasticizers that can be used include but are not limited to compatible members of the following families: citrates, sulphonamides, alkyl sulfonic acid esters, adipates, saturated low molecular weight polyesters, isobutyrates and glutarates.

Many of the glycerol esters suitable as plasticizers in the present aqueous polymer compositions are commercially available. Those which are not available can be prepared using known esterification reactions involving glycerol and a monocarboxylic acid containing from 2 to 6 carbon atoms. The molar ratio of acid to glycerol will be substantially equivalent to the average number of esterified hydroxyl groups per molecule desired in the final ester. In the case of the tributyl ester, this product is commercially available as either a n-butyl or iso-butyl or mixtures of esters.

In another aspect, the objectionable odor of higher glycerol esters such as the tributyrate can be masked using small quantities of fragrances including but not limited to juniper oil. Mixed esters of butyric acid are very low in odor.

Aqueous polymer dispersions containing the plasticizers of this invention can be prepared using conventional techniques for preparing these compositions. Typically the glycerol ester or a mixture of these esters is added to a stirred aqueous dispersion of the film-forming polymer(s). In addition to the dispersed polymer and water, the dispersion can contain one or more of the additional ingredients typically present in aqueous polymer dispersion, including but not limited to surfactants, coalescing agents, wetting agents, pigments and dyes.

The plasticizers of this invention can be used with any of the organic polymers conventionally used in aqueous film-forming compositions. Suitable polymers for use in the present aqueous compositions include but are not limited to polyvinyl acetate, copolymers of vinyl acetate with ethylene or other olefins, acrylic polymers, acrylic/styrene copolymers, polyesters, polyurethanes, elastomeric styrene/butadiene copolymers and neoprene.

The glycerol ester plasticizers of this invention are suitable alone or in combination with known plasticizers discussed hereinbefore in a wide variety of aqueous polymer emulsions for numerous end use applications. These applications include but not limited to adhesives, varnishes, paints and other types of protective and decorative coatings, caulks, sealants, polishes, inks, and protective films.

An environmentally important advantage of the present esters is that they may be prepared using glycerol and carboxylic acids obtained from naturally occurring materials in contrast to petroleum-based alcohols and acids.

Film-forming properties of aqueous polymer dispersions and the properties exhibited by films from these dispersions are improved using plasticizers that include mono-, di- and triesters of glycerol.

| Blend of Triester with homopolymer | | | | Blend of Triester with copolymer | | | |
|---|---|---|---|---|---|---|---|
| % Viscosity Increase | | | | % Viscosity Increase | | | |
| Parts | 1 hour | 1 Day | 3 Days | Parts | 1 hour | 1 Day | 3 Days |
| 0 | 0 | 0 | 0 | 0 | 0 | 0 | 0 |
| 8 | 15-25 | 15-25 | 15-25 | 3 | 45-55 | 45-55 | 45-55 |
| 10 | 15-25 | 15-25 | 15-25 | 5 | 95-105 | 95-105 | 95-105 |
| 12 | 45-55 | 45-55 | 45-55 | 7 | 80-90 | 80-90 | 170-180 |

| Blend of Mono/Di/Tri with homopolymer | | | | Blend of Mono/Di/Tri with copolymer | | | |
|---|---|---|---|---|---|---|---|
| % Viscosity Increase | | | | % Viscosity Increase | | | |
| Parts | 1 hour | 1 Day | 3 Days | Parts | 1 hour | 1 Day | 3 Days |
| 0 | 0 | 0 | 0 | 0 | 0 | 0 | 0 |
| 8 | 20-30 | 20-30 | 30-40 | 3 | 40-50 | 45-55 | 45-55 |
| 10 | 30-40 | 40-50 | 50-60 | 5 | 85-95 | 90-100 | 90-100 |
| 12 | 50-60 | 50-60 | 60-70 | 7 | 145-155 | 145-150 | 150-160 |

### Effect on Tg

| Blend of Triester with homopolymer | | Blend of Triester with copolymer | |
|---|---|---|---|
| Parts | Amount Decreased | Parts | Amount Decreased |
| 10 | 4.5-5.5 | 5 | 3.5-4.5 |
| 12 | 9-10 | 7 | 10.5-11.5 |

| Blend of Mono/Di/Tri with homopolymer | | Blend of Mono/Di/Tri with copolymer | |
|---|---|---|---|
| Parts | Amount Decreased | Parts | Amount Decreased |
| 10 | 7.5-8.5 | 5 | 4.5-5.5 |
| 12 | 9-10 | 7 | 10-11 |

Effect on Open Time

| Blend of Triester with homopolymer | | Blend of Triester with copolymer | |
|---|---|---|---|
| Parts | Seconds Increased | Parts | Seconds Increased |
| 8 | 10-20 | 3 | 5-15 |
| 10 | 25-35 | 5 | 20-30 |
| 12 | 30-40 | 7 | 30-40 |

| Blend of Mono/Di/Tri with homopolymer | | Blend of Mono/Di/Tri with copolymer | |
|---|---|---|---|
| Parts | Seconds Increased | Parts | Seconds Increased |
| 8 | 10-20 | 3 | 2.5-7.5 |
| 10 | 20-30 | 5 | 5-15 |
| 12 | 20-30 | 7 | 5-15 |

The following examples describe preferred embodiments of the present plasticizers and plasticized compositions. These examples should not be interpreted as limiting the scope of the present invention as described in the accompanying claims. Unless otherwise specified all parts and percentages are by weight and reported measurements and other data were obtained under ambient conditions.

### EXAMPLES

### Example 1: Preparation of Esters

The esters referred to hereinafter as glycerol tributyrate, glycerol trioctoate and glycerol triacetate were purchased from commercial sources.

The ester composition referred to as a mixture of glycerol mono- di- and tributyrates was prepared using the following procedure:

The following types and amounts of reactants were charged into a four-neck glass reaction vessel equipped with an agitator, inert gas inlet, packed distillation column and means to collect the water formed as a by-product of the esterification reaction: 259 parts of glycerin, 491 parts of butyric acid, and 0.26 parts of zirconium carbonate and 0.13 parts of stannous oxalate as the esterification catalyst. The resultant mixture was heated to a temperature of 230° C. and the by-product water collected. The course of the esterification was followed by gas chromatography and determination of acid number. Following completion of the reaction the reaction mixture was neutralized using sodium carbonate, bleached, and washed with water. The resulting mixture contained approximately 20 parts of the monoester, 50 parts of the diester and 30 parts of the triester.

### Example 2: Preparation and Evaluation of Adhesives

Glycerol tributyrate, the mixture of the mono-, di- and tributyl esters and glycerol trioctoate were evaluated in two commercially available aqueous polymer dispersions. Glycerol triacetate and a commercial benzoate ester plasticizer available as Benzoflex^{®} LA 705 were also evaluated for comparative purposes.

One of the dispersions was a product of Forbo identified as Pace^{®} 383 contained a polyvinyl acetate homopolymer. The second dispersion, a product of Wacker Chemie identified as Airflex^{®} 400, contained a vinyl acetate/ethylene copolymer.

Plasticized polymer compositions were prepared from each of the dispersions by blending the polymer dispersions with the quantities of esters specified in the following tables to form a homogeneous dispersion. Compositions containing glycerol triacetate and the commercial benzoate ester were used as controls.

Stable dispersion containing glycerol trioctoate at concentrations of 8 percent in the copolymer emulsion and 12 percent in the homopolymer emulsion alone could not be prepared due to the incompatibility of this ester with the polymer at those concentration levels and was not evaluated further.

The polymer compositions contained the following amounts of polymer dispersion and ester:
Pace^{®} 383- 100 parts plus 8, 10 or 12 parts of the ester or blend being evaluated.
Airflex^{®} 400 - 100 parts plus 3, 5 or 7 parts of the ester or ester blend being evaluated.

Samples of the two polymer dispersions without any plasticizer were also evaluated as controls.

The blends of polymer dispersion and ester were prepared using a Caframo^{®} mixer operating at 500 rpm for a period of 10 minutes. Viscosities of adhesives were determined at the times indicated in the tables below.

The resultant blends were allowed to stand for 72 hours before being evaluated using the following tests:

### Compatibility

Tg suppression (on an applied film)
Open time of a film applied using each of the dispersions,
Set time for a film applied using each dispersion.

The properties were measured using the following procedures: Compatibility Three mil-thick films (when wet) (76.2 µm) were drawn down on a clean glass plate. The plate was allowed to dry for 24 hours on a level surface. The films were then examined for signs of incompatibility as evidenced by opaqueness, exudation, and/or the presence of surface defects.

### Viscosity

Measurements were made 1, 24 and 72 hours or 1 and 5 days after blending in plasticizer using a Brookfield (RVT) viscometer @ 25°C. The viscosity was allowed to stabilize for 30 seconds before recording reading.

### Tg Suppression

Adhesive films were drawn down at a 0.15 mm [6mil] thickness and allowed to dry for 48 hours under ambient conditions. The films were then cut and prepared for analysis using a TA Instruments DSC 2920. Analysis was performed between -60°C and 105°C employing a heating rate of 10°C/min. Reported Tg values was taken at the onset of the transition.

### Set Time

A two bar method was used to measure set times. One bar is used to meter adhesive application and the other bar is used to press the two substrates together. The metering bar was a #16 Meyer rod. The substrate used was 22.7 kg [50 lb.] uncoated unbleached Kraft, and testing was conducted at ambient. The test strips were 5.81 cm [one and one half inches] wide (bottom) or 2.54 cm [one inch] wide (top), and 30.48 cm [twelve inches] long. The top strip was centered over the bottom strip and clamped down. About one milliliter of glue was placed at the clamp and the top substrate was laminated with minimum pressure to the bottom one. The assembly was immediately removed from the clamp and a timer started. The strips were delaminated and the time to go to 80-100% fiber tear across the width of the substrate was noted. This time is the set time.

### Open Time

A three-bar (one to meter and two to laminate the substrates) method was employed. 22.7 kg [Fifty pound] unbleached Kraft paper was used as the substrate and the test conditions were 23°C and 50% R.H. A #16 Meyer rod was used to meter the adhesive. The size of the paper strips were the same as described in the procedure for determining set time. A #14 rod and a 0.69 cm [1/4"] diameter draw-down rod (press down) were assembled with rubber bands. The two pieces of paper were clamped as in set time and the top sheet was woven through the two bars so that the 0.64 cm [1/4"] rod was press down rod. The rods were placed at the clamp. About one milliliter of adhesive was placed at the point on the bottom substrate just below the two bars and drawn down with the #16 rod. A timer was started and the adhesive was left "open", i.e. exposed to atmospheric conditions, before the top strip was laminated to the bottom strip. The procedure was repeated, if a bond was formed, until the point was reached that the adhesive could no longer form a bond. The open time is the maximum time interval between application of the adhesive and bringing the substrates together within which a satisfactory bond can be obtained.

The results of the preceding tests are summarized in the following tables. Comparative examples are indicated by the letter C.

All parts are by weight per 100 parts of polymer dispersion.

### Viscosity Response

| **Homopolymer with Tributyrate (C)** | | | | **Copolymer with Tributyrate (C)** | | | |
|---|---|---|---|---|---|---|---|
| **Viscosity, cps After** | | | | **Viscosity, cps After** | | | |
| Parts | 1 Hour | 1 Day | 3 Days | Parts | 1 Hour | 1 Day | 3 Days |
| 0 | 4050 | 4050 | 4050 | 0 | 2650 | 2650 | 2650 |
| 8 | 4900 | 4800 | 5050 | 3 | 3950 | 3850 | 3950 |
| 10 | 5500 | 5400 | 5750 | 5 | 5400 | 5200 | 5400 |
| 12 | 6000 | 5950 | 6250 | 7 | 4900 | 4800 | 7300 |

| Homopolymer with Triacetate (C) | | | | Copolymer with Triacetate (C) | | | |
|---|---|---|---|---|---|---|---|
| Viscosity, cps After | | | | Viscosity, cps After | | | |
| Parts | 1 Hour | 1 Day | 3 Days | Parts | 1 Hour | 1 Day | 3 Days |
| 0 | 4050 | 4050 | 4050 | 0 | 2650 | 2650 | 2650 |
| 8 | 4900 | 4900 | 5100 | 3 | 3400 | 3450 | 3550 |
| 10 | 5050 | 5250 | 5450 | 5 | 4000 | 4000 | 4150 |
| 12 | 5400 | 5600 | 5800 | 7 | 4850 | 5350 | 5500 |

| Homopolymer With Mono-/Di-/Tributyate Blend | | | | Copolymer With Mono-/Di-/Tributyrate Blend | | | |
|---|---|---|---|---|---|---|---|
| Viscosity, cps After | | | | Viscosity, cps After | | | |
| Parts | 1 Hour | 1 Day | 3 Days | Parts | 1 Hour | 1 Day | 3 Days |
| 0 | 4200 | 4300 | 4200 | 0 | 2900 | 2950 | 2900 |
| 8 | 5150 | 5500 | 5700 | 3 | 4150 | 4400 | 4350 |
| 10 | 5750 | 6150 | 6500 | 5 | 5450 | 5650 | 5650 |
| 12 | 6500 | 6800 | 6900 | 7 | 7200 | 7350 | 7400 |

| Homopolymer With Benzoflex® LA 705 (C) | | | | Copolymer With Benzoflex® LA 705 (C) | | | |
|---|---|---|---|---|---|---|---|
| Viscosity, cps After | | | | Viscosity, cps After | | | |
| Parts | 1 Hour | 1 Day | 3 Days | Parts | 1 Hour | 1 Day | 3 Days |
| 0 | 4050 | 4050 | 4050 | 0 | 2650 | 2650 | 2650 |
| 8 | 4600 | 4800 | 5200 | 3 | 3700 | 3650 | 3800 |
| 10 | 5500 | 5450 | 5700 | 5 | 5100 | 4950 | 5050 |
| 12 | 5700 | 5600 | 5900 | 7 | 6700 | 6700 | 6900 |

The compatibility of the various individual plasticizers was examined. The only one found to be incompatible was the glycerol trioctanoate. Testing was discontinued on this plasticizer.

### Tg of 3 mil-Thick (76.2 µm) Film

| Homopolymer w. Tributyrate [C] | | Copolymer w. Tributyrate [C] | |
|---|---|---|---|
| Parts | Tg | Parts | Tg |
| 8 | 13.79° C | 3 | 0.71° C |
| 10 | 8.66° C | 5 | -3.21 ° C |
| 12 | 4.01°C | 7 | -10.26° C |

### Triacetate [C]

### Homopolymer w. Triacetate Copolymer w. Triacetate

| Parts | Tg | Parts | Tg |
|---|---|---|---|
| 8 | 15.04° C | 3 | 1.76° C |
| 10 | 9.06° C | 5 | -0.54° C |
| 12 | 7.27° C | 7 | -6.14° C. |

| Homopolymer w. Mono-, Di-, Tributyrate Blend | | Copolymer w. Mono-, Di-, Tributyrate Blend | |
|---|---|---|---|
| Parts | Tg | Parts | Tg |
| 8 | 8.07°C | 3 | -7.7° C |
| 10 | 0.6°C. | 5 | -12.8° C. |
| 12 | -1.4° C. | 7 | -18.1° C. |

| Homopolymer w. Benzoflex® LA705[C] | | Copolymer w. Benzoflex® LA705 [C] | |
|---|---|---|---|
| Parts | Tg | Parts | Tg |
| 8 | 17.4° C. | 3 | -3.0° C. |
| 10 | 13.5°C. 5 | | -6.1° C. |
| 12 | 8.6°C. | 7 | -7.4° C. |

### Open Time

| Homopolymer w. Tributyrate | | Copolymer w. Tributyrate | |
|---|---|---|---|
| Parts | Seconds | Parts | Seconds |
| 0 | 5 | 0 | 10 |
| 8 | 20 | 3 | 20 |
| 10 | 30 | 5 | 25 |
| 12 | 35 | 7 | 35 |

| Homopolymer w. Triacetate[C] | | Copolymer w. Triacetate [C] | |
|---|---|---|---|
| Parts | Seconds | Parts | Seconds |
| 0 | 5 | 0 | 10 |
| 8 | 25 | 3 | 15 |
| 10 | 25 | 5 | 20 |
| 12 | 35 | 7 | 35 |

| Homopolymer w Mono-/Di-/Tri-Butyrate Blend | | Copolymer w Mono-/Di-/Tri-Butyrate Blend | |
|---|---|---|---|
| Parts | Seconds | Parts | Seconds |
| 0 | 1 | 0 | 10 |
| 8 | 15 | 3 | 15 |
| 10 | 25 | 5 | 20 |
| 12 | 25 | 7 | 20 |

| Homopolymer w. Benzoflex ® LA 705 (C) | | Copolymer w. Benzoflex® LA 705 (C) | |
|---|---|---|---|
| Parts | Seconds | Parts | Seconds |
| o | 1 | 0 | 10 |
| 8 | 5 | 3 | 15 |
| 10 | 15 | 5 | 20 |
| 12 | 15 | 7 | 25 |

### Set Time (sec.) Average of 3 Measurements

| Homopolymer with Tributyrate | | Copolymer With Tributyrate | |
|---|---|---|---|
| Parts | Seconds | Parts | Seconds |
| 0 | 8 | 0 | 7 |
| 8 | 8 | 3 | 8 |
| 10 | 9 | 5 | 7 |
| 12 | 8 | 7 | 8 |

| Homopolymer with Triacetate [C] | | Copolymer with Triacetate [C] | |
|---|---|---|---|
| Parts | Seconds | Parts | Seconds |
| 0 | 8 | 0 | 7 |
| 8 | 8 | 3 | 8 |
| 10 | 9 | 5 | 7 |
| 12 | 9 | 7 | 8 |

| Homopolymer With Mono-/Di-/Tri-Butyrate Blend | | Copolymer with Mono-/Di-/Tri-Butyrate Blend | |
|---|---|---|---|
| Parts | Seconds | Parts | Seconds |
| 0 | 6 | 0 | 3 |
| 8 | 5 | 3 | 2 |
| 10 | 3 | 5 | 3 |
| 12 | 5 | 7 | 3 |

| Homopolymer With Benzoflex® LA 705 [C] | | Copolymer With Benzoflex® LA 705 [C] | |
|---|---|---|---|
| Parts | Seconds | Parts | Seconds |
| 0 | 6 | 0 | 3 |
| 8 | 5 | 3 | 2 |
| 10 | 4 | 5 | 2 |
| 12 | 3 | 7 | 2 |

The data indicates that the mono, di, tributyrate blend performs unexpectedly well versus the commercial standard control, Benzoflex® LA 705. The viscosity response was very good.

## Claims

1. An aqueous film-forming polymer composition comprising an aqueous emulsion that includes 1) an aqueous phase, 2) a suspended phase comprising particles of a film-forming organic polymer, and 3) an amount of glycerol ester effective for plasticizing said polymer, wherein the glycerol ester is a mixture of mono-, di- and triesters of glycerol, the glycerol esters having a general formula 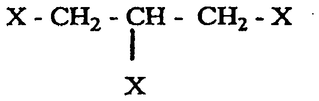 wherein 0 to 2 X groups are hydroxyl and 1 to 3 X groups are 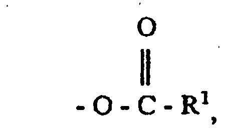 wherein R¹ is -(CH2)ₙ-CH₃, where n is 1 to 5, wherein all R¹ groups are identical,
wherein the glycerol ester is a blend of 15 to 25 parts monoester, 45 to 55 parts diester, and 25 to 35 parts triester, wherein the parts are by weight per 100 parts of glycerol ester blend, and
wherein the film forming polymer composition includes from 0.1 to 50 weight percent glycerol ester, based on the total weight of said film forming polymer composition.

2. The aqueous composition according to claim 1 wherein R¹ includes from 2 to 5 carbon atoms.

3. The aqueous composition according to claim 1 wherein said organic polymer is selected from the group consisting of polyvinyl acetate, copolymers of vinyl acetate and ethylene or olefin(s), acrylic polymers, acrylic/styrene copolymers, polyesters, polyurethanes, styrene/butadiene elastomers, neoprene and mixtures thereof.

4. The aqueous film-forming polymer composition of claim 1 wherein said composition contains at least one additional plasticizer selected from the group consisting of phthalates, terephthalates, citrates, sulphonamides, alkyl sulfonic acid esters, adipates, saturated low molecular weight polyesters, isobutyrates, and glutarates.

5. The aqueous film-forming polymer composition of claim 1 wherein said composition contains at least one additional plasticizer selected from the group consisting of 1) esters of benzoic acid with monohydric alcohols, dihydric alcohols, monomeric glycols and oligomeric glycols and 2) esters of 1,2; 1,3- and 1,4-cyclohexanedicarboxylic acids with monohydric alcohols containing from 1 to 6 carbon atoms.

6. The aqueous composition of claim 1, wherein the glycerol ester is a blend of 20 parts of the monoester, 50 parts of the diester, and 30 parts of the triester.

7. A method for making an aqueous film-forming polymer composition, the method comprising; dispersing particles of film-forming organic polymer in an aqueous phase to form an aqueous dispersion of film-forming polymer; and blending glycerol ester with the aqueous dispersion of film-forming polymer in an amount effective for plasticizing the polymer, wherein the glycerol ester is a mixture of mono-, di- and triesters of glycerol, the glycerol esters having a general formula 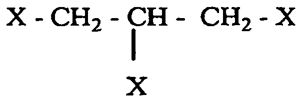 wherein 0 to 2 X groups are hydroxyl and 1 to 3 X groups are 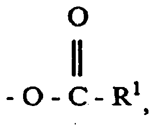 wherein R¹ is -(CH2)n-CH3, where n is 1 to 5, wherein all R¹ groups are identical,
wherein the glycerol ester is a blend of 15 to 25 parts monoester, 45 to 55 parts diester, and 25 to 35 parts triester, wherein the parts are by weight per 100 parts of glycerol ester blend, and
wherein the film forming polymer composition includes from 0.1 to 50 weight percent glycerol ester, based on the total weight of said film forming polymer composition.

8. The method according to claim 7 wherein R¹ includes from 2 to 5 carbon atoms.

9. The method according to claim 7 wherein said organic polymer is selected from the group consisting of polyvinyl acetate, copolymers of vinyl acetate and ethylene or olefin(s), acrylic polymers, acrylic/styrene copolymers, polyesters, polyurethanes, styrene/butadiene elastomers, neoprene and mixtures thereof.

10. The method of claim 7 wherein said composition contains at least one additional plasticizer selected from the group consisting of phthalates, terephthalates, citrates, sulphonamides, alkyl sulfonic acid esters, adipates, saturated low molecular weight polyesters, isobutyrates, and glutarates.

11. The method of claim 7 wherein said composition contains at least one additional plasticizer selected from the group consisting of 1) esters of benzoic acid with monohydric alcohols, dihydric alcohols, monomeric glycols and oligomeric glycols and 2) esters of 1,2; 1,3- and 1,4-cyclohexanedicarboxylic acids with monohydric alcohols containing from 1 to 6 carbon atoms.

12. The method of claim 7, wherein the glycerol ester is a blend of 20 parts of the monoester, 50 parts of the diester, and 30 parts of the triester.

13. Use of the aqueous film-forming composition of claim 3 or 5, wherein said organic polymer is a film-forming ingredient of a composition selected from the group consisting of adhesives, coatings, overprint varnishes, caulks, sealants, inks and floor polishes, and compositions for the application of self-supporting films.

## Patentansprüche

1. Eine wässrige filmbildende Polymerzusammensetzung, aufweisend eine wässrige Emulsion, die 1) eine wässrige Phase, 2) eine suspendierte Phase, aufweisend Partikel eines filmbildenden organischen Polymers, und 3) eine zum Plastifizieren des besagten Polymers effektive Menge an Glycerolester einschließt, wobei der Glycerolester ein Gemisch aus Mono-, Di- und Triestern von Glycerol ist, wobei die Glycerolester eine allgemeine Formel 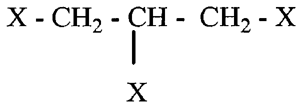 haben, wobei 0 bis 2 X-Gruppen Hydroxyl sind und 1 bis 3 X-Gruppen 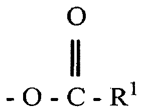 sind, wobei R¹ -(CH₂)ₙ-CH₃ ist, wobei n 1 bis 5 ist, wobei alle R¹-Gruppen identisch sind,
wobei der Glycerolester ein Gemisch aus 15 bis 25 Teilen Monoester, 45 bis 55 Teilen Diester, und 25 bis 35 Teilen Triester ist, wobei die Teile Gewichtsteile pro 100 Teilen an Glycerolestergemisch sind, und
wobei die filmbildende Polymerzusammensetzung von 0,1 bis 50 Gewichtsprozent Glycerolester einschließt, bezogen auf das Gesamtgewicht der besagten filmbildenden Polymerzusammensetzung.

2. Die wässrige Zusammensetzung gemäß Anspruch 1, wobei R¹ von 2 bis 5 Kohlenstoffatome einschließt.

3. Die wässrige Zusammensetzung gemäß Anspruch 1, wobei das besagte organische Polymer ausgewählt ist aus der Gruppe bestehend aus Polyvinylacetat, Copolymeren von Vinylacetat und Ethylen oder Olefin(en), Acrylpolymeren, Acryl/Styrol-Copolymeren, Polyestern, Polyurethanen, Styrol/Butadien-Elastomeren, Neopren und Gemischen davon.

4. Die wässrige filmbildende Polymerzusammensetzung von Anspruch 1, wobei die besagte Zusammensetzung mindestens ein zusätzliches Plastifiziermittel enthält, ausgewählt aus der Gruppe bestehend aus Phthalaten, Terephthalaten, Citraten, Sulfonamiden, Alkylsulfonsäureestern, Adipaten, gesättigten Polyestern mit niedrigem Molekulargewicht, Isobutyraten, und Glutaraten.

5. Die wässrige filmbildende Polymerzusammensetzung von Anspruch 1, wobei die besagte Zusammensetzung mindestens ein zusätzliches Plastifiziermittel enthält, ausgewählt aus der Gruppe bestehend aus 1) Estern von Benzoesäure mit monohydrischen Alkoholen, dihydrischen Alkoholen, monomeren Glykolen und oligomeren Glykolen, und 2) Estern von 1,2-; 1,3- und 1,4-Cyclohexandicarbonsäuren mit monohydrischen Alkoholen, die von 1 bis 6 Kohlenstoffatome enthalten.

6. Die wässrige Zusammensetzung von Anspruch 1, wobei der Glycerolester ein Gemisch aus 20 Teilen des Monoesters, 50 Teilen des Diesters, und 30 Teilen des Triesters ist.

7. Ein Verfahren zum Herstellen einer wässrigen filmbildenden Polymerzusammensetzung, wobei das Verfahren aufweist; Dispergieren von Partikeln von filmbildendem organischen Polymer in einer wässrigen Phase, um eine wässrige Dispersion von filmbildendem Polymer zu bilden; und Mischen von Glycerolester mit der wässrigen Dispersion von filmbildendem Polymer in einer zum Plastifizieren des Polymers effektiven Menge, wobei der Glycerolester ein Gemisch aus Mono-, Di- und Triestern von Glycerol ist, wobei die Glycerolester eine allgemeine Formel 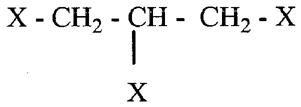 haben, wobei 0 bis 2 X-Gruppen Hydroxyl sind und 1 bis 3 X-Gruppen 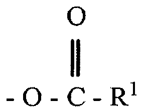 sind, wobei R¹ -(CH₂)ₙ-CH₃ ist, wobei n 1 bis 5 ist, wobei alle R¹-Gruppen identisch sind,
wobei der Glycerolester ein Gemisch aus 15 bis 25 Teilen Monoester, 45 bis 55 Teilen Diester, und 25 bis 35 Teilen Triester ist, wobei die Teile Gewichtsteile pro 100 Teilen an Glycerolestergemisch sind, und
wobei die filmbildende Polymerzusammensetzung von 0,1 bis 50 Gewichtsprozent Glycerolester einschließt, bezogen auf das Gesamtgewicht der besagten filmbildenden Polymerzusammensetzung.

8. Das Verfahren gemäß Anspruch 7, wobei R¹ von 2 bis 5 Kohlenstoffatome einschließt.

9. Das Verfahren gemäß Anspruch 7, wobei das besagte organische Polymer ausgewählt ist aus der Gruppe bestehend aus Polyvinylacetat, Copolymeren von Vinylacetat und Ethylen oder Olefin(en), Acrylpolymeren, Acryl/Styrol-Copolymeren, Polyestern, Polyurethanen, Styrol/Butadien-Elastomeren, Neopren und Gemischen davon.

10. Das Verfahren von Anspruch 7, wobei die besagte Zusammensetzung mindestens ein zusätzliches Plastifiziermittel enthält, ausgewählt aus der Gruppe bestehend aus Phthalaten, Terephthalaten, Citraten, Sulfonamiden, Alkylsulfonsäureestern, Adipaten, gesättigten Polyestern mit niedrigem Molekulargewicht, Isobutyraten, und Glutaraten.

11. Das Verfahren von Anspruch 7, wobei die besagte Zusammensetzung mindestens ein zusätzliches Plastifiziermittel enthält, ausgewählt aus der Gruppe bestehend aus 1) Estern von Benzoesäure mit monohydrischen Alkoholen, dihydrischen Alkoholen, monomeren Glykolen und oligomeren Glykolen, und 2) Estern von 1,2-; 1,3- und 1,4-Cyclohexandicarbonsäuren mit monohydrischen Alkoholen, die von 1 bis 6 Kohlenstoffatome enthalten.

12. Das Verfahren von Anspruch 7, wobei der Glycerolester ein Gemisch aus 20 Teilen des Monoesters, 50 Teilen des Diesters, und 30 Teilen des Triesters ist.

13. Verwendung der wässrigen filmbildenden Zusammensetzung von Anspruch 3 oder 5, wobei das besagte organische Polymer ein filmbildender Inhaltsstoff einer Zusammensetzung ist, ausgewählt aus der Gruppe bestehend aus Klebstoffen, Beschichtungen, Überdrucklacken, Fugenmitteln (*caulks*), Dichtungsmitteln, Tinten und Bodenpoliermitteln, und Zusammensetzungen für die Anwendung von selbsttragenden Filmen.

## Revendications

1. Composition aqueuse de polymère filmogène comprenant une émulsion aqueuse qui inclut 1) une phase aqueuse, 2) une phase en suspension comprenant des particules d'un polymère organique filmogène, et 3) une quantité d'ester de glycérol efficace pour plastifier ledit polymère, où l'ester de glycérol est un mélange de mono-, di- et triesters de glycérol, les esters de glycérol ayant une formule générale 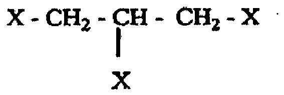 où 0 à 2 groupes X sont hydroxyle et 1 à 3 groupes X sont 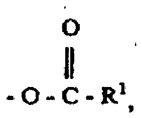 où R¹ est -(CH₂)ₙ-CH₃, où n est 1 à 5, où tous les groupes R¹ sont identiques,
où l'ester de glycérol est un mélange de 15 à 25 parties de monoester, 45 à 55 parties de diester et 25 à 35 parties de triester, où les parties sont en poids pour 100 parties de mélange d'esters de glycérol, et
où la composition de polymère filmogène inclut de 0,1 à 50 pourcent en poids d'ester de glycérol, sur la base du poids total de ladite composition de polymère filmogène.

2. Composition aqueuse selon la revendication 1, où R¹ inclut de 2 à 5 atomes de carbone.

3. Composition aqueuse selon la revendication 1, où ledit polymère organique est choisi dans le groupe consistant en le poly(acétate de vinyle), les copolymères d'acétate de vinyle et d'éthylène ou d'oléfine(s), les polymères acryliques, les copolymères acrylique/styrène, les polyesters, les polyuréthanes, les élastomères styrène/butadiène, le néoprène et leurs mélanges.

4. Composition aqueuse de polymère filmogène selon la revendication 1, où ladite composition contient au moins un plastifiant supplémentaire choisi dans le groupe consistant en les phtalates, les téréphtalates, les citrates, les sulfonamides, les esters d'acide alkylsulfonique, les adipates, les polyesters de faible masse moléculaire saturés, les isobutyrates et les glutarates.

5. Composition aqueuse de polymère filmogène selon la revendication 1, où ladite composition contient au moins un plastifiant supplémentaire choisi dans le groupe consistant en 1) les esters d'acide benzoïque avec des alcools monohydroxylés, des alcools dihydroxylés, des glycols monomères et des glycols oligomères et 2) les esters d'acides 1,2-, 1,3- et 1,4-cyclohexanedicarboxyliques avec des alcools monohydroxylés contenant de 1 à 6 atomes de carbone.

6. Composition aqueuse selon la revendication 1, où l'ester de glycérol est un mélange de 20 parties du monoester, 50 parties du diester et 30 parties du triester.

7. Procédé pour produire une composition aqueuse de polymère filmogène, le procédé comprenant : la dispersion de particules de polymère organique filmogène dans une phase aqueuse pour former une dispersion aqueuse de polymère filmogène ; et le mélange d'ester de glycérol avec la dispersion aqueuse de polymère filmogène en une quantité efficace pour plastifier le polymère, où l'ester de glycérol est un mélange de mono-, di- et triesters de glycérol, les esters de glycérol ayant une formule générale 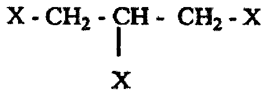 où 0 à 2 groupes X sont hydroxyle et 1 à 3 groupes X sont 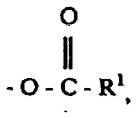 où R¹ est -(CH₂)ₙ-CH₃, où n est 1 à 5, où tous les groupes R¹ sont identiques,
où l'ester de glycérol est un mélange de 15 à 25 parties de monoester, 45 à 55 parties de diester et 25 à 35 parties de triester, où les parties sont en poids pour 100 parties de mélange d'esters de glycérol, et
où la composition de polymère filmogène inclut de 0,1 à 50 pourcent en poids d'ester de glycérol, sur la base du poids total de ladite composition de polymère filmogène.

8. Procédé selon la revendication 7, où R¹ inclut de 2 à 5 atomes de carbone.

9. Procédé selon la revendication 7, où ledit polymère organique est choisi dans le groupe consistant en le poly(acétate de vinyle), les copolymères d'acétate de vinyle et d'éthylène ou d'oléfine(s), les polymères acryliques, les copolymères acrylique/styrène, les polyesters, les polyuréthanes, les élastomères styrène/butadiène, le néoprène et leurs mélanges.

10. Procédé selon la revendication 7, où ladite composition contient au moins un plastifiant supplémentaire choisi dans le groupe consistant en les phtalates, les téréphtalates, les citrates, les sulfonamides, les esters d'acide alkylsulfonique, les adipates, les polyesters de faible masse moléculaire saturés, les isobutyrates et les glutarates.

11. Procédé selon la revendication 7, où ladite composition contient au moins un plastifiant supplémentaire choisi dans le groupe consistant en 1) les esters d'acide benzoïque avec des alcools monohydroxylés, des alcools dihydroxylés, des glycols monomères et des glycols oligomères et 2) les esters d'acides 1,2-, 1,3- et 1,4-cyclohexanedicarboxyliques avec des alcools monohydroxylés contenant de 1 à 6 atomes de carbone.

12. Procédé selon la revendication 7, où l'ester de glycérol est un mélange de 20 parties du monoester, 50 parties du diester et 30 parties du triester.

13. Utilisation de la composition filmogène aqueuse selon la revendication 3 ou 5, où ledit polymère organique est un ingrédient filmogène d'une composition choisie dans le groupe consistant en les adhésifs, les revêtements, les vernis de surimpression, les produits de calfatage, les produits d'étanchéité, les encres et les encaustiques à parquet, et les compositions pour l'application de films autoporteurs.
